# EUROPEAN PATENT SPECIFICATION

(11) **EP 3 092 335 B1**
(45) Date of publication and mention of the grant of the patent: **15.05.2019**
(21) Application number: 14880260.6
(22) Date of filing: 30.12.2014
(51) Int. Cl.: C08J 11/04, C08J 11/14, D06M 16/00, D06M 11/00, C08L 67/02, C08L 1/24

(54) **A PROCESS FOR RECOVERING POLYESTER**
VERFAHREN ZUR RÜCKGEWINNUNG VON POLYESTER
PROCÉDÉ DE RÉCUPÉRATION DE POLYESTER

(30) Priority: 06.01.2014 IN 4133MU2013
(43) Date of publication of application: 16.11.2016
(73) Proprietor: Reliance Industries Limited, Mumbai 400 021 Maharashtra (IN)
(72) Inventor: RANGASWAMY VIDHYA, Thane Maharashtra 400605 (IN); JAGTAP AMIT RANGARAO, Thane Maharashtra 421306 (IN); SRIVASTAVA ANURAG, Navi Mumbai Maharashtra 410210 (IN); BALACHANDRAN VIJAI, Vellore Tamil Nadu 632002 (IN); JOSHI HARSHVARDHAN, Gwalior Madhya Pradesh 474012 (IN)
(74) Representative: Groth & Co. KB
(86) International application number: PCT/IN2014/000806
(87) International publication number: WO 2015/111071

(56) References cited:
- WO-A1-2012/149344
- CN-A- 102 199 310
- CN-A- 102 675 089
- CN-A- 102 675 089
- CN-A- 102 911 395
- JP-A- 2002 173 828
- US-A- 2 532 183
- DATABASE WPI Week 199634 Thomson Scientific, London, GB; AN 1996-339876 XP002771897, & JP H08 158265 A (ECOLOG RECYCLING JAPAN KK) 18 June 1996 (1996-06-18)

## Description

### FIELD

The present disclosure relates to a process for recovering polyester. Particularly, the present disclosure relates to a process for recovering polyester component and products of non-polyester component from an article comprising a polyester blend.

### BACKGROUND

Polyesters and its blends with various substances such as cotton, silk and viscose find applications in various articles such as apparel, home furnishings, upholstery, containers, carpets and the like owing to their flexibility and a range of desirable properties.

Waste or used polyester is either burned or buried in landfills. These methods, although common in practice, are immensely detrimental to the environment. This is because the microorganisms present in the soil are unable to degrade the polyester which causes its accumulation in the soil. Such accumulated polyester mars the growth and development of the flora and fauna present in the sub-soil environment thereby disturbing the ecological balance.

Attempts have been made by the scientific community to tackle the afore-stated dilemma. US Patent Number 5236959 discloses a process for recycling polyester/cotton blends by subjecting the blends to a first alcoholysis in a bath containing an alcohol and an effective catalyst such as sodium hydroxide and sodium carbonate at a suitable temperature until the polyester is depolymerized into a lower molecular weight polyester oligomer. Cotton fibers are removed from this alcoholic solution of oligomers and are further processed by pulping and acetylyzing processes to recover the cellulose acetate. The low molecular weight polyester oligomers are alcoholized yet again to produce the lower dialkyl ester of terephthalic acid.

CN102675089 discloses a recycling method of waste polyester-cotton blended fabric, which comprises the steps of: carrying out alkaline hydrolysis, dilution, filtering, acid separation, centrifugal drying, and drying processes to obtain a terephthalic acid finished product. Additional process steps are required in this method as after the alkaline hydrolysis step when the full sodium terephthalate is dissolved in dilute alkali solution, the cellulose is also soluble in dilute gamma lye, cellulose acetate insoluble species, become floc. The lye is filtered through a filter, or thick polyester fabric with thick nylon cloth filter media evacuated under reduced pressure to accelerate the filtration rate

WO2012149344 relates to methods for degrading or converting a cellulosic material and for producing substances from the cellulosic material under high temperature conditions with an enzyme composition in the presence of a GH61 polypeptide having cellulolytic enhancing activity.

JPH08158265 relates to a method for recovering a polyester-cotton fiber textile product by treating the textile product with an aqueous solution of cellulose enzyme, hydrolyzing and separating the polyester fibers from the textile product.

JP2002173828 relates to a method for recycling a polyester-cotton fiber product by mixing the fiber product with a cellulase enzyme for decomposing the cotton fiber into glucose, and separating the polyester fiber.

The conventional methods, however, are associated with certain drawbacks such as use of expensive hydrolyzing agents and complex methods which render the process of recycling cumbersome. Therefore, there exists a need to provide a simple and effective process which facilitates easy separation of the polyester from the blend and which renders the polyester and the other hydrolysis products suitable for recycling or reuse.

### OBJECTS

Some of the objects of the present disclosure, which at least one embodiment is able to achieve, are discussed herein below.

It is an object of the present disclosure to provide a process for recovering polyester component and products of non-polyester component from an article comprising a polyester blend.

It is another object of the present disclosure to provide a process for recovering polyester component and products of non-polyester component from an article comprising a polyester blend, which precludes the environmental hazards associated with the disposal of polyester products.

It is yet another object of the present disclosure to provide a process for recovering polyester component and products of non-polyester component from an article comprising a polyester blend which is simple and devoid of complex process steps.

It is still another object of the present disclosure to ameliorate one or more problems of the prior art or to at least provide a useful alternative.

Other objects and advantages of the present disclosure will be more apparent from the following description and accompanying drawings which is not intended to limit the scope of the present disclosure.

### SUMMARY

The present disclosure provides a process for recovering a polyester component and products of non-polyester component from an article comprising a polyester blend. Typically, the polyester blend comprises a polyester component and a non-polyester component and the polyester component is polyethylene terephthalate and the nonpolyester component is at least one selected from the group consisting of cotton and viscose. The process comprises hydrolyzing the article using at least one hydrolyzing agent to obtain a first mixture comprising the polyester component, the non-polyester component, optionally, products of the non-polyester component and the hydrolyzing agent, followed by incubating the first mixture with at least one enzyme selected from the group consisting of cellulose and pectinase to further convert the non-polyester component into its products; thereby releasing the polyester component. The step of hydrolyzing the article is carried out at a temperature ranging from 90 to 160 °C for a time period ranging from 10 to 90 minutes and at a pressure ranging from 3.45×10⁴ to 1.72×10⁵ Pascal (5 to 25 psi). Furthermore, the step of incubating is carried out in the presence of a buffer having strength ranging from 30 to 70 mM and pH ranging from 4.5 to 7.0 for an incubation period ranging from 20 to 50 hours at a temperature ranging from 40 to 60 °C and accompanied by stirring at a speed ranging from 150 to 250 rpm. The buffer is sodium citrate. The present disclosure also provides a process for the removal of dye from the polyester blend.

### BRIEF DESCRIPTION OF THE DRAWINGS

The disclosure will now be described with reference to accompanying non-limiting drawings, wherein:

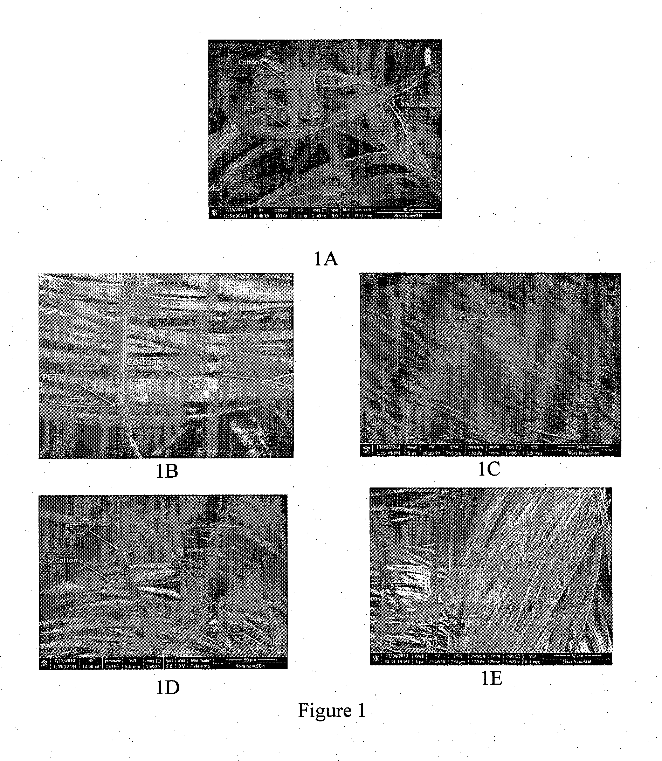

Figure 1 illustrates Scanning Electron Microscopy images of PET/Cotton (65:35) fabric blend after undergoing the process as disclosed in Example 6, wherein
Figure 1A represents Control PET/Cotton (65:35) (untreated);
Figure 1B represents PET/Cotton (65:35) after treatment with 4% Na₂CO₃ and 5 g/ L of enzyme; and
Figure 1C represents PET/Cotton (65:35) after treatment with 4% Na₂CO₃ and 10 g/L enzyme.
Figure ID represents PET/COtton (65:35) after treatment with 0.5% NaOH and 5 g/L enzyme.
Figure IE represents PET/COtton (65:35) after treatment with 0.5 %NaOH and 10 g/L enzyme.

### DETAILED DESCRIPTION

Production, distribution and consumption of polyester and polyester blends has increased significantly over the years. This has, however, consequently aggravated the problem of their waste disposal. The inventors of the present disclosure have developed a process for the recovery and reuse of polyester and non-polyester components from used or waste articles containing polyester blends so that the necessity of their disposal in the environment is eliminated.

In accordance with the process of the present disclosure, the polyester blend is composed of a polyester component and a non-polyester component. The polyester component is polyethylene terephthalate (PET) and the non-polyester component is at least one selected from the group consisting of cotton and viscose. The article, before initiating the process described herein below, is optionally subjected to shredding.

In accordance with the present process, the article is first hydrolyzed at pre-determined temperature, pressure and time duration using at least one hydrolyzing agent to obtain a first mixture. The pre-determined temperature ranges from 90 to 160 °C, the time period for hydrolysis ranges from 10 to 90 minutes and the pre-determined pressure ranges from 3.45 x 10⁴ to 1.72 x 10⁵ Pascal. Typically, the amount of said article taken during the step of hydrolyzing ranges from 1 to 5 % with respect to the total volume of the hydrolyzing agent. In accordance with one embodiment, the hydrolyzing agent used is at least one alkali selected from the group consisting of sodium hydroxide, sodium carbonate, calcium hydroxide and calcium carbonate and has concentration ranging from 0.1 to 5%. In accordance with another embodiment, the hydrolyzing agent used in the present process is water. In an embodiment, the process of hydrolyzing is carried out in an autoclave. The first mixture that results from the step of hydrolyzing typically comprises a polyester component, a non-polyester component and the hydrolyzing agent. The mixture may also optionally contain products of the non-polyester component as a result of the step of hydrolysis. The first mixture is an eclectic mix which is a result of the reaction between the hydrolyzing agent and the non-polyester component. The first mixture is optionally neutralized to wash off the hydrolyzing agent.

The present step of alkali hydrolysis may also be used to remove dye(s) when the nonpolyester component of the article is dyed. Thus, when the article is subjected to hydrolysis using a strong alkali at the afore-stated conditions, removal of dye from the article is achieved.

After alkali hydrolysis, the first mixture is incubated with at least one enzyme selected from the group consisting of cellulase and pectinase to further separate the nonpolyester component from the polyester component. This is achieved by means of the afore-stated enzymes which convert the non-polyester component into its products an act which releases the polyester component
The term 'products of the non-polyester component' includes the products or fragments of the non-polyester component obtained or left behind after the steps of alkali hydrolysis and/ or enzyme treatment. In one embodiment, 'products of the nonpolyester component' are the disintegration products of the non-polyester component. In accordance with another embodiment, the products of the non-polyester component of the present disclosure are carbohydrates.

The step of incubation with enzyme(s) is carried out in the presence of a buffer which is sodium citrate. Typically, the strength of the buffer ranges from 30 to 70 111M and has pH ranging from 4.5 to 7.0. Furthermore, the step of incubating is carried out for a time period ranging from 20 to 50 hours at a temperature ranging from 40 to 60 °C and is accompanied by stirring at a speed ranging from 150 to 250 rpm. In accordance with the present process, the enzyme is selected from the group consisting of cellulase and a combination of cellulase and pectinase. Furthermore, the enzyme has a concentration ranging from 0.5 to 15 g/L. In one embodiment, the enzymes after employment in the present process, once, may be recycled up to 3 times without losing much of their activity. As mentioned previously, incubation with the afore-stated enzyme(s) results in further separation and release of the polyester component from the non-polyester component and both the, separated components are recovered and processed independently for re-use or for preparing value added products.

A characteristic feature of the present disclosure is that separation of the non-polyester component from the polyester component is achieved twice, first chemically during the hydrolysis step and second biologically using the enzyme(s). This causes effective separation and maximum recovery of both the components. It is significant to note that during both the afore-stated steps, the non-polyester component gets reduced to derivatives/ products which can be processed independently to obtain value added products.

The present disclosure will now be discussed in the light of the following non-limiting embodiments:
Various types of fabrics made up of polyester blends such as PET/Viscose (65:35), PET/Cotton (80:20) and PET/Cotton (65:35) were tested for recovery of their polyester and non-polyester components in accordance with the process of the present disclosure. The process was also optimized as is presented herein below. Once the trials were carried out, the glucose that was released was analyzed by high performance liquid chromatography (HPLC) with Refractive Index (RID) detector and the cellulose conversion was estimated. BioRAD-Aminex HPX-87H column was used for separation. The mobile phase was 0.05 M sulfuric acid (H2S04) and the flow rate was maintained at 0.6 ml/min.

### Example 1: Effect of (i) shredding and (ii) autoclaving with an alkali

### Sample: PET/COtton (80:20) and PET/Viscose (65:35)

Initially, PET/Viscose (65:35) and PET/Cotton (80:20) fabrics were shredded finely. 0.1 g of shredded PET/Cotton was then autoclaved at 121 °C for 15 min with 40 ml of 4% NaOH solution. The alkali treated PET/Cotton was neutralized. Shredded PET/Viscose was autoclaved under similar conditions but in water. Both the samples were subjected to incubation using 5 g/L (6.4 FPU/40 ml) of cellulase (SacchariSEB C6) and 5 g/L of pectinase (Advanced Enzymes Pvt. Ltd. India) in the presence of 40 ml of 50 111M Na-citrate buffer (pH 4.8), for an incubation period of 48 hours at 50° C, 200 rpm. After enzyme treatment, the fabrics were rinsed to remove the enzymes and dried to obtain the weight loss data.

A similar set of trial was conducted without shredding both the sample fabrics. Results (Table 1) indicate that:
- shredding does not improve the hydrolysis of cotton from PET/Cotton; and
- hydrolysis of viscose from PET/Viscose can be achieved without the treatment with alkali.

**Table 1: Enzymatic hydrolysis of PET/Cotton (80:20) and PET/Viscose (65:35)**

| Fabric type | Treatment | Enzyme used | Cellulose conversion | Weight loss (^{0 0}) |
|---|---|---|---|---|
| PET/C0tton | Shredding+ autoclaving in alkali | SacchariSEB C6+ Pectinase | 42.7 | 18.6 |
| PET/Viscose | Shredding+ autoclaving in water | SacchariSEB C6 + pectinase | 80.27 | 27.0 |
| PET/C0tton | No shredding+ autoclaving in alkali | SacchariSEB C6+ Pectinase | 50.0 | 21.3 |
| PET/Viscose | No shredding + autoclaving in water | SacchariSEB + pectinase | 76.0 | 24.2 |

### Example 2: Optimization of enzyme loading

### Sample: PET/Viscose (65:35) and PET/COtton (80:20)

PET/Viscose (65:35) and PET/Cotton (80:20) were cut into pieces weighing 0.1 g each.

PET/Cotton was autoclaved with 40 ml of 4% NaOH solution for 15 min at 121 ° C whereas PET/Viscose was autoclaved under similar conditions but with water. Both the samples were then subjected to incubation using varying concentrations (0.5-5.0 g/L) of the enzymes cellulase (SacchariSEB C6) and pectinase (Advanced Enzymes Pvt Ltd. India) in the presence of 10 ml of 50 111M Na-citrate buffer (pH 4.8) for 48 hours at 50° C, 200 rpm.

The results (Table 2) indicate that:
- even low concentration of enzyme loading (0.5 g/L) was effective in efficient hydrolysis of cotton and viscose portions; and
- maximum conversion of 95.5% viscose to glucose was obtained at 2.0 g/L of enzyme loading.

**Table 2: Optimization of enzyme loading for PET/Viscose (65:35) and PET/Cotton (80:20) blends**

| Fabric type | Enzyme conc. (g/L) | Cellulose conversion (⁰ 0) | Weight loss (^{0 0}) |
|---|---|---|---|
| PET/C0tton | 0.5 | 85.43 | 32.52 |
| PET/Viscose | 0.5 | 87.85 | 32.52 |
| PET/C0tton | 1.0 | 73.89 | 30.50 |
| PET/Viscose | 1.0 | 94.0 | 30.87 |
| PET/C0tton | 2.0 | 69.7 | 31.85 |
| PET/Viscose | 2.0 | 95.5 | 30.78 |
| PET/C0tton | 5.0 | 47.45 | 29.56 |
| PET/Viscose | 5.0 | 92.6 | 30.20 |

### Example 3: Optimization of fabric loading

### Sample: PET/COtton (65:35)

PET/Cotton fabric (65: 35) was cut into small pieces and pretreated with 4% NaOH and autoclaved at 121 °C for 15 min. Different fabric loads in the range of 0.1 g to 2.0 g per 40 ml of alkali were used. After autoclaving, the fabric was separated from the alkali solution using a fine nylon strainer. The separated fabric was washed thoroughly for neutralizing the alkali. This was followed by incubating using 5 g/L (800 FPU/L) of the enzyme cellulase (CodeXyme4) from Codexis Inc, USA. The incubation was carried out in 40 ml of 50 111M Na-citrate buffer (pH 4.8) for 24-48 hours, at 50° C, 200 rpm.

Results (Table 3) indicate that:
- at I g and 0.5 g fabric loading in 40 ml (2.5% w/v and 1.25% w/v respectively) alkali, better glucose conversion (43% and 42.05 °/0) was obtained after enzyme treatment for 48 hours; and
- cellulose conversion to glucose was significantly more at 48 h as compared to 24 hours.

**Table 3: Optimization of fabric loading**

| Fabric loading (g/ 40 ml) | Glucose | | Conversion (⁰/0) (based on cellulose proportion in fabric) | | Weight loss (⁰ 0) after alkali treatment |
|---|---|---|---|---|---|
| | 24 hours | 48 hours | 24 hours | 48 hours | |
| 0.1 | traces | traces | traces | traces | 58.3 |
| 0.5 | 1.17 | 1.84 | 26.7 | 42.05 | 47.8 |
| 1.0 | 2.40 | 3.78 | 27.4 | 43.14 | 45.0 |
| 1.5 | 3.32 | 5.06 | 25.3 | 38.47 | 42.46 |
| 2.0 | 3.46 | 5.15 | 19.77 | 29.42 | 41.20 |

### Example 4: Effect of different alkalis

### Sample: PET/COtton (65:35)

PET/Cotton fabric (65:35) was autoclaved at 121 °C for 15 min with different alkalis having 4 % w/v concentration. The alkalis used were sodium hydroxide (NaOH), sodium carbonate (Na2C03), calcium carbonate (CaC03) and calcium hydroxide (Ca(OH)2). Fabric loading of 0.5 g in 40 ml (1.25% w/v) of alkali was used.

This was followed by incubation using the enzymes cellulase (CodeXyme 4) and pectinase at 5 g/ L each for 48 hours at 50° C, 200 rpm. 40 ml of 50 mM Na-citrate buffer having a pH of 4.8 was used.

Results (Table 4) indicate that:
• NaOH is most effective (39.5% cellulose conversion) followed by Na2C03 (35.5% conversion) in the afore-stated process conditions

**Table 4: Effect of different alkali**

| Alkali | Cellulose conversion (⁰/0) (48 hours) |
|---|---|
| CaC03 | 16 |
| Na2 C03 | 35.5 |
| NaOH | 39.5 |
| | 26.0 |

### Example 5: Optimization of enzyme loading

### Sample: PET/COtton (65:35)

0.5 g of PET/Cotton (65:35) was autoclaved at 121 °C for 15 min with 40 ml of 0.5 % NaOH and 4% Na2C03. This was followed by incubation using cellulase (CodeXyme4) at vawing concentrations: 1 to 15 g/ L (6.4 FPU-96 FPU). 40 ml of 50 mM Na-citrate buffer having pH 4.8 was used and the incubation period was 48 hours, at 50° C, 200 rpm.

Results (Table 5) indicate that:
• For 4% Na2C03 pre-treated fabric, cellulose conversion and fabric weight loss (°/0) reached a peak at the enzyme loading of 5 g/ L (32 FPU) and did not increase significantly beyond.
• For 0.5% NaOH pre-treated fabric, enzyme loading of 10 and 15 g/ L did not show significant change in the percentage cellulose conversion.
• Fabric weight loss (°/0) at 10 and 15 g/ L enzyme loading (NaOH pre-treated fabric) was close to the percentage of cotton in the fabric (35%) but the cellulose conversion values did not correlate with the weight loss.
• As per the cellulose conversion values, when Na2C03 was used as the hydrolyzing agent, 5 g/ L enzyme loading was found to be optimum beyond which there was no significant increase; whereas in the case of NaOH, 10 g/ L and 15 g/ L enzyme loading showed higher conversion effect.

**Table 5: Optimization of enzyme loading for PET/cotton (65:35)**

| | Na2C03 (4%) | | NaOH (0.5%) | |
|---|---|---|---|---|
| Enzyme loading (g/L), (FPU in 40 ml reaction) | Cellulose conversion | Weight loss | Cellulose conversion | Weight loss (⁰/0) |
| 1 (6.4 FPU) | 15.77 | 12 | 17.6 | 20 |
| 2 (13.6 FPU) | 25.14 | 14 | 24.39 | 20 |
| 4 (25.6 FPU) | 28.31 | 14.2 | 38.17 | 20 |
| 5 (32 FPU) | 40.68 | 22 | 41.3 | 28 |
| 10 (64 FPU) | 41.1 | 24 | 48 | 30.2 |
| 15 (96 FPU) | 41.3 | 24 | 52.5 | 30.2 |

Scanning Electron Microscopy (SEM) images (Figure 1) also showed that most of the cotton fiber was removed at 10 g/ L enzyme loading.

### Example 6: Optimization of alkali concentration

### Sample: PET/COtton (65:35)

0.5 g of PET/Cotton (65:35) was autoclaved at 121 °C for 15 min with 40 ml ofNaOH and Na2C03 in the range of 0.5% - 4% (w/v). This was followed by incubation using the enzyme cellulase (CodeXyme4) for 48 hours, at 50° C, 200 rpm. 40 ml of 50 111M Na-citrate buffer having a pH of 4.8 was used. Enzyme loading was done at 5 g/ L (32 FPU in 40 ml reaction). The results obtained are presented in Figures IA, 1B, IC, ID and IE.

Results (Table 6) and Figure I indicate that:
• increasing the concentration ofNaOH led to an increase in the fabric weight loss without any significant change in the cellulose conversion. This was attributed to abrasion of PET fibers.
• Na2C03 treatment showed only a slight increase in cellulose conversion and weight loss beyond a conc. of 0.5 % (w/v).

**Table 6: Optimization of alkali concentration for PET/Cotton (65:35)**

| | Na2C03 | | NaOH | |
|---|---|---|---|---|
| Alkali conc. (% w/v) | Cellulose conversion (⁰/0) | Weight loss | Cellulose conversion (⁰/0) | Weight loss (⁰/0) |
| 0.5 | 28.11 | 18 | 45.02 | 23 |
| 1.0 | 32.68 | 20 | 48.91 | 24.6 |
| 2.0 | 32.67 | 18.8 | 48.4 | 32.0 |
| 3.0 | 33.76 | 21.6 | 48.45 | 40.0 |
| 4.0 | 35.2 | 23.0 | 52.43 | 44.0 |

### Example 7: Removal of dye

### Sample: PET/COtton (65:35)

0.5 g of dyed PET/Cotton (65:35) fabric upon autoclaving at 121 °C for 15 min with 40 ml of 0.5% NaOH and 4% Na2C03 led to the PET/COtton (65:35) fabric being devoid of the dye.

### Example 8: Recyclability of enzyme

### Sample: for PET/COtton (65:35)

0.5 g of PET/Cotton (65:35) was autoclaved with 40 ml of either 0.5% NaOH or 4% Na2C03 at 121 °C for 15 min. This was followed by incubation using the enzyme cellulase (CodeXyme4) at 5 and 10 g/ L concentrations for 48 hours, at 50° C, 200 rpm.

40 ml of 50 mM Na-citrate buffer having pH 4.8 was used.

Results (Table 7) indicate that:
at higher enzyme dose of 10 g/ L, the enzyme cocktail could be recycled twice without any decrease in glucose conversions and about 78% and 67 % of their activity could be retained in the third cycle with 4% Na2C03 and 0.5 % NaOH treated fabric respectively.

**Table 7: Recyclability of enzyme**

| Sample | Cellulose conversion (⁰/0) based on Cotton % in blend (weight loss ⁰/0) | | |
|---|---|---|---|
| | I cycle | 11 cycle | 111 cycle |
| 0.5% NaOH (5 g/ L enzyme) | 40(18) | 19.601) | 2001) |
| 0.5% NaOH (10 g/ L enzyme) | 48.2(21) | 48.8(21) | 32.506) |
| 4% Na2C03 (5 g/ L enzyme) | 37.7(17.4) | 17.802) | 18.4(12.8) |
| 4% Na2C03 (10 g/ L enzyme) | 38.1707) | 36.307) | 3005) |

### Example 9: Scale up of the PET/cotton (65:35) fabric blend treatment for cellulose hydrolysis to 1 liter scale

11.25 g of PET/Cotton (65:35) was autoclaved with I liter of 4.0% Na2C03 at 121 °C for 15 min. This was followed by incubation using the enzyme cellulase (CodeXyme4) at 5 g/ L concentration (800 FPU in I liter reaction) for 48 hours, at 50° C, 200 rpm. 40 ml of 50 111M Na-citrate buffer having pH 4.8 was used.

The conversion percentage at I liter scale was quite similar to that obtained at 40 ml reaction with same fabric loading and 4.0% Na2C03 pretreatment (Table 8), indicating that the process is scalable.

**Table 8: Scalability studies**

| Treatment scale | Glucose yield | Cellulose conversion % (based on Cotton proportion in fabric) | Fabric weight loss |
|---|---|---|---|
| I Liter scale | 1.52 | 38.67 | 19.4 |
| 40 ml scale | 1.77 | 40.68 | 22.0 |

The embodiments herein and the various features and advantageous details thereof are explained with reference to the non-limiting embodiments in the description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation.

### TECHNICAL ADVANTAGES AND ECONOMIC SIGNIFICANCE

- The process disclosed in the present disclosure facilitates recovery and recycling of polyester with high recovery rate.
- The process of the present disclosure provides a means of disposal of waste polyester which is not harmful to the environment.
- The process disclosed in the present disclosure facilitates conversion of the recovered non-polyester component into value added products with high conversion rate.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or ingredients or quantities, as the use may be in the embodiment of the invention to achieve one or more of the desired objects or results.

The numerical values given for various physical parameters, dimensions and quantities are only approximate values and it is envisaged that the values higher than the numerical value assigned to the physical parameters, dimensions and quantities fall within the scope of the invention and the claims unless there is a statement in the specification to the contrary.

## Claims

1. A process for recovering, a polyester component and products of a non-polyester component, from an article comprising a polyester blend comprising said polyester component and said non-polyester component, wherein said polyester component is polyethylene terephthalate (PET), and said non-polyester component is at least one selected from the group consisting of cotton and viscose; said process comprising the following steps:
i. hydrolyzing said article at a temperature in the range of 90 to 160 °C for a time period ranging from 10 to 90 minutes, and at a pressure in the range of 3.45 × 10⁴ to 1.72×10⁵ Pascal (5 to 25 psi), using at least one hydrolyzing agent, being an alkali having concentration in the range of 0.1 to 5% w/v, to obtain a first mixture comprising said polyester component, said non-polyester component, optionally, products of said non-polyester component and said hydrolyzing agent; and
ii. incubating said first mixture with at least one enzyme selected from the group consisting of cellulase and a combination of cellulase and pectinase, and having a concentration ranging from 0.5 to 15 g/L,to further convert said non- polyester component into products of said non-polyester component and release the polyester component;
wherein said step of incubating is carried out in the presence of sodium citrate as a buffer having strength ranging from 30 to 70 mM and pH ranging from 4.5 to 7.0 for a period ranging from 20 to 50 hours at a temperature ranging from 40 to 60 °C; wherein said step of incubating includes stirring at a speed ranging from 150 to 250 rpm.

2. The process as claimed in claim 1, wherein said step of hydrolyzing said article includes a pre-step of shredding said article.

3. The process as claimed in claim 1, wherein said step of hydrolyzing said article is carried out in an autoclave.

4. The process as claimed in claim 1, wherein said alkali is selected from the group consisting of sodium hydroxide, sodium carbonate, calcium hydroxide and calcium carbonate.

5. The process as claimed in claim 1, wherein said step of hydrolyzing further comprises neutralizing said first mixture.

6. The process as claimed in claim 1, wherein said article is dyed article and said non-polyester component includes a dye.

## Patentansprüche

1. Verfahren zur Rückgewinnung eines Polyesterbestandteils und Produkten eines Nicht-Polyesterbestandteils aus einem Gegenstand, der eine Polyestermischung bestehend aus dem Polyesterbestandteil und dem Nicht-Polyesterbestandteil umfasst, wobei der Polyesterbestandteil Polyethylenterephthalat (PET) ist und der Nicht-Polyesterbestandteil mindestens einer ist, der aus der Gruppe bestehend aus Baumwolle und Viskose gewählt wird, wobei das Verfahren die folgenden Schritte umfasst:
i. Hydrolysieren des Gegenstands bei einer Temperatur im Bereich von 90 bis 160 °C für einen Zeitraum im Bereich von 10 bis 90 Minuten und bei einem Druck im Bereich von 3,45 x 10⁴ bis 1,72 x 10⁵ Pascal (5 bis 25 psi) mittels mindestens eines hydrolysierenden Mittels, das ein Alkali mit einer Konzentration im Bereich von 0,1 bis 5% (w/v) ist, um eine erste Mischung zu erhalten, die den Polyesterbestandteil, den Nicht-Polyesterbestandteil, optional Produkte des Nicht-Polyesterbestandteils und das hydrolysierende Mittel umfasst; und
ii. Inkubieren der ersten Mischung mit mindestens einem Enzym, das aus der Gruppe bestehend aus Cellulase und einer Kombination von Cellulase und Pektinase gewählt wird und eine Konzentration im Bereich von 0,5 bis 15 g/l aufweist, um den Nicht-Polyesterbestandteil weiter in Produkte des Nicht-Polyesterbestandteils umzuwandeln und den Polyesterbestandteil freizusetzen;
wobei der Schritt des Inkubierens unter Vorhandensein von Natriumcitrat als Puffer mit einer Stärke im Bereich von 30 bis 70 mM und einem pH-Wert im Bereich von 4,5 bis 7,0 für einen Zeitraum im Bereich von 20 bis 50 Stunden bei einer Temperatur im Bereich von 40 bis 60 °C ausgeführt wird;
wobei der Schritt des Inkubierens das Rühren bei einer Geschwindigkeit im Bereich von 150 bis 250 U/min einschließt.

2. Verfahren nach Anspruch 1, wobei der Schritt des Hydrolysierens des Gegenstands eine Vorstufe des Zerkleinerns des Gegenstands einschließt.

3. Verfahren nach Anspruch 1, wobei der Schritt des Hydrolysierens des Gegenstands in einem Autoklav ausgeführt wird.

4. Verfahren nach Anspruch 1, wobei das Alkali aus der Gruppe bestehend aus Natriumhydroxid, Natriumkarbonat, Kalziumhydroxid und Kalziumkarbonat gewählt wird.

5. Verfahren nach Anspruch 1, wobei der Schritt des Hydrolysierens ferner das Neutralisieren der ersten Mischung umfasst.

6. Verfahren nach Anspruch 1, wobei der Gegenstand ein gefärbter Gegenstand ist und der Nicht-Polyesterbestandteil einen Farbstoff enthält.

## Revendications

1. Procédé de récupération d'un composant polyester et de produits d'un composant non polyester à partir d'un article comprenant un mélange de polyester comprenant ledit composant polyester et ledit composant non polyester, dans lequel ledit composant polyester est le polyéthylène téréphtalate (PET), et ledit composant non polyester est au moins un composant choisi dans le groupe constitué de coton et de viscose, ledit procédé comprenant les étapes suivantes :
i. hydrolyser ledit article à une température comprise entre 90 et 160 °C pendant une durée comprise entre 10 et 90 minutes, et à une pression comprise entre 3,45 x 104 et 1,72 x 105 Pascal (5 à 25 psi),
en utilisant au moins un agent hydrolysant, étant un alcali ayant une concentration comprise entre 0,1 et 5% p/v, pour obtenir un premier mélange comprenant ledit composant polyester, ledit composant non-polyester, éventuellement les produits dudit composant non-polyester et ledit agent hydrolysant ; et
ii. incuber ledit premier mélange avec au moins une enzyme choisie dans le groupe constitué de cellulose et une combinaison de cellulose et de pectinase, et ayant une concentration allant de 0,5 à 15 g/L, pour convertir en outre ledit composant non-polyester en produits dudit composant non-polyester et libérer le composant polyester ;
dans lequel ladite étape d'incubation est effectuée en présence de citrate de sodium comme tampon ayant une force allant de 30 à 70 mM et un pH allant de 4,5 à 7,0 pendant une période allant de 20 à 50 heures à une température comprise entre 40 à 60 °C ; dans lequel ladite étape d'incubation comprend une agitation à une vitesse allant de 150 à 250 tr/m.

2. Procédé selon la revendication 1, dans lequel ladite étape d'hydrolyse dudit article comprend une étape préalable de déchiquetage dudit article.

3. Procédé selon la revendication 1, dans lequel ladite étape d'hydrolyse dudit article est réalisée dans un autoclave.

4. Procédé selon la revendication 1, dans lequel ledit alcali est choisi dans le groupe constitué d'hydroxyde de sodium, de carbonate de sodium, d'hydroxyde de calcium et de carbonate de calcium.

5. Procédé selon la revendication 1, dans lequel ladite étape d'hydrolyse comprend en outre la neutralisation dudit premier mélange.

6. Procédé selon la revendication 1, dans lequel ledit article est un article teint et ledit composant non polyester comprend un colorant.
